(19) Europäisches Patentamt
European Patent Office
Office européen des brevets

(11) **EP 4 242 259 A1**

(12) **EUROPEAN PATENT APPLICATION**
published in accordance with Art. 153(4) EPC

(43) Date of publication:
**13.09.2023 Bulletin 2023/37**

(21) Application number: **21889046.5**

(22) Date of filing: **21.10.2021**

(51) International Patent Classification (IPC):
**C08K 7/02** (2006.01)  **C08L 45/00** (2006.01)
**C08L 61/04** (2006.01)  **C08L 81/02** (2006.01)
**C08L 63/00** (2006.01)  **C08J 5/04** (2006.01)

(52) Cooperative Patent Classification (CPC):
**C08J 5/04; C08K 7/02; C08L 45/00; C08L 61/04;
C08L 63/00; C08L 81/02**

(86) International application number:
**PCT/JP2021/038942**

(87) International publication number:
**WO 2022/097493 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.11.2020 JP 2020185078
05.11.2020 JP 2020185079**

(71) Applicant: **Toray Industries, Inc.
Tokyo 103-8666 (JP)**

(72) Inventors:
• **HIRATA Shin
Nagoya-shi, Aichi 455-8502 (JP)**
• **SUZUKI Takafumi
Nagoya-shi, Aichi 455-8502 (JP)**
• **HAMAGUCHI Mitsushige
Nagoya-shi, Aichi 455-8502 (JP)**

(74) Representative: **Mewburn Ellis LLP
Aurora Building
Counterslip
Bristol BS1 6BX (GB)**

(54) **MOLDING MATERIAL AND MOLDED ARTICLE**

(57) Provided are: a molding material containing a reinforcing fiber bundle (A) and a polyphenylene sulfide (B), wherein the melting point of the polyphenylene sulfide is 270°C or less; and a molded article containing a reinforcing fiber and a polyphenylene sulfide, wherein the weight average fiber length of the reinforcing fiber is 0.3 mm or more and 3.0 mm or less, and the melting point of the polyphenylene sulfide is 270°C or less, or the crystallization temperature during cooling of the polyphenylene sulfide is 190°C or less. Because the generation of gas derived from the reinforcing fiber bundle or a sizing agent during a molding process can be reduced, and the surface roughening of a molded article due to the gas can be suppressed, a molding material achieving both of surface smoothness and mechanical properties of the molded article can be obtained.

**FIG. 1**

**Description**

Technical Field of the Invention

The present invention relates to a molding material containing a reinforcing fiber bundle and a polyphenylene sulfide and a molded article containing a reinforcing fiber and a polyphenylene sulfide.

Background Art of the Invention

As a molding material having a continuous reinforcing fiber bundle and a thermoplastic resin as a matrix, various forms such as thermoplastic prepreg, yarn and glass mat (GMT) are known. Such molding materials are easy to mold by taking advantage of the properties of thermoplastic resins, do not require storage loads like thermosetting resins, and further, the resulting molded articles have high toughness and have excellent features in recycling property. In particular, molding materials processed into pellets can be applied to molding methods such as injection molding and stamping molding, which are excellent in economic efficiency and productivity, and are useful as industrial materials.

Patent documents 1 and 2 disclose that a molded article with high mechanical properties can be obtained by injection molding a molding material comprising a continuous reinforcing fiber bundle and polyphenylene sulfide resin. On the other hand, Patent document 3 discloses that a polyarylene sulfide containing para-arylene sulfide units, meta-arylene sulfide units and a filler improves adhesiveness to an epoxy resin while maintaining heat resistance and mechanical properties.

Prior art documents

Patent documents

    Patent document 1: JP-A-2012-158746
    Patent document 2: JP-A-2012-158747
    Patent document 3: JP-A-8-269200

Summary of the Invention

Problems to be solved by the Invention:

In the future, it seems that molded articles will become smaller, thinner, and more complicated in shape, and molding materials will be required to have higher precision moldability and excellent appearance properties (surface smoothness of molded articles after molding the molding material).

On the other hand, when molding the molding material, if gas is generated from the molding material, the moldability and appearance properties may be impaired. In particular, when molding into a shape small, thin and complicated as described above, even if it is gas with a small amount, the gas may have a large affection on moldability, dimensional accuracy, and appearance properties.

On the other hand, in order to impart high mechanical properties to a molded article, it is necessary to contain a reinforcing fiber bundle in the molding material constituting a molded article.

However, until now, no attention has been paid to the gas generated from the reinforcing fiber bundle and its sizing agent, and no study has been made to reduce the gas. This is probably because the amount of gas generated from the reinforcing fiber bundle and its sizing agent was not so large and there was no need to reduce it.

Namely, a molding material containing a reinforcing fiber bundle, which is good in moldability, dimensional accuracy, and appearance properties even when molded into a small, thin, and complicated shape, has not yet been found.

An object of the present invention has been made in view of the above-described circumstances, and more concretely, it is to provide a molding material that can achieve both of excellent surface smoothness and mechanical properties of a molded article by reducing generation of gas during a molding process and suppressing a surface roughening of the molded article.

Means for solving the Problems:

To achieve the above-described object, the present invention has the following configurations.

[1] A molding material containing a reinforcing fiber bundle (A) and a polyphenylene sulfide (B), wherein a melting point of the polyphenylene sulfide (B) is 270°C or less.

[2] The molding material according to [1], wherein the polyphenylene sulfide (B) contains para-phenylene sulfide units and meta-phenylene sulfide units, and the content of the meta-phenylene sulfide units is 7 mol% or more with respect to the total amount of the para-phenylene sulfide units and the meta-phenylene sulfide units.

[3] The molding material according to [1] or [2], wherein the molding material is a long fiber pellet.

[4] The molding material according to any of [1] to [3], wherein the reinforcing fiber bundles (A) are arranged parallel to the axial direction of the molding material, and the length of the reinforcing fiber bundles (A) is substantially the same as the length of the molding material.

[5] The molding material according to any of [1] to [4], wherein a crystallization temperature during cooling of the polyphenylene sulfide (B) is 190°C or less.

[6] The molding material according to any of [1] to [5], wherein a difference between a crystallization temperature during cooling and the melting point of the polyphenylene sulfide (B) is 80°C or more.

[7] The molding material according to any of [1] to [6], wherein the molding material comprises the polyphenylene sulfide (B) and a composite, the composite comprises the reinforcing fiber bundle (A) and a resin (C), the resin (C) comprises one or more resins selected from the group consisting of an epoxy resin, a phenolic resin and a terpene resin, and the composite is coated with the polyphenylene sulfide (B).

[8] The molding material according to any of [1] to [7], wherein reinforcing fibers forming the reinforcing fiber bundle (A) are carbon fibers.

[9] The molding material according to any of [1] to [8], wherein a sizing agent adheres to the reinforcing fiber bundle (A).

[10] A molded article containing a reinforcing fiber and a polyphenylene sulfide, wherein a weight average fiber length of the reinforcing fiber is 0.3 mm or more and 3.0 mm or less, and a melting point of the polyphenylene sulfide is 270°C or less.

[11] A molded article containing a reinforcing fiber and a polyphenylene sulfide, wherein a weight average fiber length of the reinforcing fiber is 0.3 mm or more and 3.0 mm or less, and a crystallization temperature during cooling of the polyphenylene sulfide is 190°C or less.

[12] The molded article according to [11], wherein a melting point of the polyphenylene sulfide is 270°C or less.

[13] The molded article according to any of [10] to [12], wherein the polyphenylene sulfide contains para-phenylene sulfide units and meta-phenylene sulfide units, and the content of the meta-phenylene sulfide units is 7 mol% or more with respect to the total amount of the para-phenylene sulfide units and the meta-phenylene sulfide units.

[14] The molded article according to any of [10] to [13], wherein the polyphenylene sulfide contains a homo-polyphenylene sulfide composed of only para-phenylene sulfide units and a copolymerized polyphenylene sulfide comprising para-phenylene sulfide units and meta-phenylene sulfide units.

Effect according to the Invention:

According to the present invention, because the generation of gas derived from the reinforcing fiber bundle or a sizing agent during a molding process can be reduced, and the surface roughening of a molded article due to the gas can be suppressed, a molding material achieving both of surface smoothness and mechanical properties of the molded article can be obtained.

Since the molding material of the present invention can suppress the generation of gas originating from the reinforcing fiber bundle and the sizing agent during molding process, and further, it is good in dispersion of reinforcing fibers into a molded article when an injection molding is performed, and it is possible to easily produce a molded article with excellent mechanical properties, it can be applied to a wide range of molding methods, such as including injection molding, transfer molding, blow molding, and insert molding, and in addition to them, such as plunger molding, press molding, and stamping molding.

As molded articles obtained by molding the molding material of the present invention, exemplified are automotive parts such as thrust washers, oil filters, seals, bearings, gears, cylinder head covers, bearing retainers, intake manifolds, and pedals, semiconductor/liquid crystal manufacturing equipment parts such as silicon wafer carriers, and IC chip trays, electrolytic capacitor trays, and insulating films, compressor parts such as pumps, valves, and seals, industrial machine parts such as aircraft cabin interior parts, and medical equipment parts or food and beverage production equipment parts such as sterilizers, columns, and pipes. Further, the molding material of the present invention can relatively easily obtain thin-wall molded articles having a thickness of 0.5 to 2 mm. As articles which require such thin-wall molding, exemplified are housings used in personal computers, mobile phones, etc., and members for electric/electronic devices such as ones represented by keyboard supports, which are members that support keyboards inside personal computers. In such members for electric/electronic devices, it is preferable to use carbon fibers having conductivity as the reinforcing fibers because they are imparted with electromagnetic wave shielding properties.

Brief explanation of the drawings

[Fig. 1] Fig. 1 is a schematic diagram showing an example of a cross-sectional shape along an axial direction of a preferred embodiment of a molding material of the present invention.

[Fig. 2] Fig. 2 is a schematic diagram showing another example of a cross-sectional shape along an axial direction of a preferred embodiment of a molding material of the present invention.

[Fig. 3] Fig. 3 is a schematic diagram showing an example of a cross-sectional shape in a direction perpendicular to an axis of a preferred embodiment of a molding material of the present invention.

[Fig. 4] Fig. 4 is a schematic diagram showing another example of a cross-sectional shape in a direction perpendicular to an axis of a preferred embodiment of a molding material of the present invention.

[Fig. 5] Fig. 5 is a schematic diagram showing a further example of a cross-sectional shape in a direction perpendicular to an axis of a preferred embodiment of a molding material of the present invention.

[Fig. 6] Fig. 6 is an internal see-through perspective view (schematic diagram) of a general long fiber pellet.

[Fig. 7] Fig. 7 is an internal see-through perspective view (schematic diagram) of a general short fiber pellet.

Embodiments for carrying out the Invention

Hereinafter, the present invention will be explained in detail together with embodiments.

<Molding material>

The molding material of the present invention contains a reinforcing fiber bundle (A) and polyphenylene sulfide (B). By containing the reinforcing fiber bundle (A), the fiber length of the reinforcing fiber can be kept long, and excellent mechanical properties can be exhibited.

It is preferred that the molding material of the present invention comprises the polyphenylene sulfide (B) and a composite, and the composite comprises the reinforcing fiber bundle (A) and a resin (C). It is preferred that the resin (C) comprises one or more resins selected from the group consisting of an epoxy resin, a phenolic resin and a terpene resin. Further, in the molding material of the present invention, the composite is preferably coated with the polyphenylene sulfide (B). Namely, it is preferred that the composite comprising the reinforcing fiber bundle (A) and the resin (C) (impregnation resin) selected from the group consisting of an epoxy resin, a phenolic resin and a terpene resin is in a form coated with the polyphenylene sulfide (B).

By coating the composite with the polyphenylene sulfide (B), the handling ability of the molding material is improved. The molding material of the present invention becomes a final molded article by being kneaded, for example by injection molding. From the viewpoint of the handling ability of the molding material, it is important that the composite and the polyphenylene sulfide resin do not separate until molding is performed, and maintain the form described above (the form in which the composite is coated with the polyphenylene sulfide (B)). Since the composite (especially the reinforcing fiber bundle) and the polyphenylene sulfide resin are completely different in shape (size, aspect ratio), specific gravity, and mass, if the molding material is separated into the reinforcing fiber bundle and the polyphenylene sulfide resin or the separated matter is classified when the materials are transported in a molding process, the flowability of the molding material during molding may decrease, the mechanical properties of the molded article may vary, or the surface roughening of the molded article may occur and the surface smoothness may decrease.

Here, the composite means a composite in a state that the resin (C) is filled between the single fibers of the reinforcing fiber bundle (A) (hereinafter, the resin (C) may be referred to as an "impregnation resin"). In other words, it is a state that the resin (C) is impregnated between the single fibers of the reinforcing fiber bundle (A). Namely, it is a composite in a state that reinforcing fibers are dispersed like islands in a sea of impregnation resin.

Although it is desirable that the reinforcing fiber bundle (A) is completely impregnated with the impregnation resin, a certain amount of voids may exist in the composite comprising the reinforcing fiber bundle (A) and the impregnation resin. Such a void ratio is preferably in a range of 0 to 40%. More preferably, it is in a range of 0 to 20%. When the void ratio is in such a range, the impregnation and fiber dispersion promotion effect is excellent. The void ratio is determined by measurement a portion of the composite according to ASTM 2734 (1997) test method.

Further, although the form of coating is not particularly limited, for example, a form in which a part or all of the circumference of the strand-like composite is coated with the polyphenylene sulfide (B) can be exemplified. In such a form, preferably 50% or more of the circumference of the strand-like composite is coated, more preferably 80% or more of the circumference of the strand-like composite is coated, and most preferably, the entire circumference of the strand-like composite is entirely coated with polyphenylene sulfide (B).

As long as the composite and the polyphenylene sulfide (B) adhere to each other, the state of the boundary between the composite and the polyphenylene sulfide (B) is not particularly restricted, but it is preferably a state that the polyphenylene sulfide (B) partially enters into a part of the composite and becomes compatible with the impregnation resin in the composite, or impregnates into the reinforcing fiber bundle (A). In such a state, the coated polyphenylene sulfide (B) is less likely to peel off from the composite, a molding material with a good handling ability can be obtained, and because a stable feed is achieved during molding, the generation of gas can be reduced or a uniform plasticization can be achieved, and an excellent flowability can be exhibited.

It is preferred that the molding material of the present invention is in a form of a pellet and preferably a long fiber pellet. The long fiber pellet means a resin material containing reinforcing fibers having substantially the same length as that of the pellet in substantially an identical direction. In general, a long fiber pellet has a longer fiber length in a molded article after molding than that of a short fiber pellet, and therefore, exhibits superior mechanical properties. On the other hand, the long fiber pellet tends to be significantly inferior in moldability (flowability). In particular, in case where a polyphenylene sulfide is used as a thermoplastic resin, this tendency is remarkable because the polyphenylene sulfide has a high molding temperature and a high crystallization rate. Here, if the molding temperature is increased in order to improve the moldability (flowability), the amount of gas derived from the reinforcing fiber bundle and sizing agent increases during molding, which causes a reduction of the appearance properties (surface smoothness) of the molded article.

However, even if the molding material is a long fiber pellet and the thermoplastic resin used is a polyphenylene sulfide, by employing the aspect of the present invention, that is, by using a polyphenylene sulfide having a melting point of 270°C or less, molding can be performed at a low molding temperature. As a result, while maintaining excellent mechanical properties, the generation of gas derived from the reinforcing fiber bundle and sizing agent during molding can be greatly suppressed, and moldability (flowability) can be significantly improved.

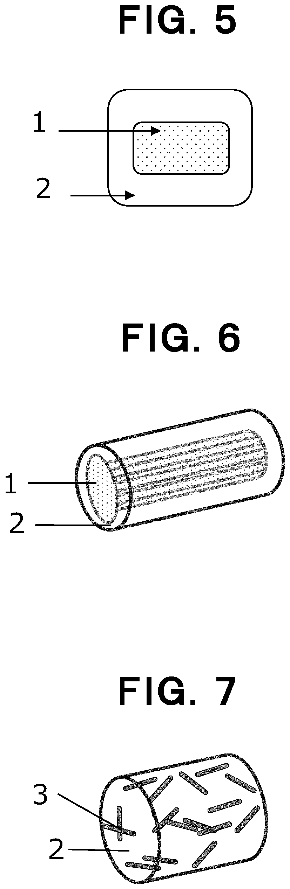

Where, the short fiber pellet means a resin material in which reinforcing fibers are randomly dispersed in a thermoplastic resin. Fig. 6 shows an internal see-through perspective view (schematic diagram) of a long fiber pellet (in the figure, reference numeral 1 indicates a reinforcing fiber bundle (A), and reference numeral 2 indicates a polyphenylene sulfide (B)). Fig. 7 shows an internal see-through perspective view (schematic diagram) of a short fiber pellet (in the figure, reference numeral 2 indicates a polyphenylene sulfide (B), and reference numeral 3 indicates reinforcing fibers). Further, a long fiber pellet can be produced by a known method.

In the molding material of the present invention, it is preferred that the reinforcing fiber bundles (A) are arranged in parallel to each other in parallel in the axial direction of the molding material (preferably pellet), and the length of the reinforcing fiber bundles (A) is substantially the same as the length of the molding material. Here, "being arranged in parallel to each other in parallel in the axial direction" means that the longitudinal axis of the reinforcing fiber bundle (A) and the longitudinal axis of the molding material are directed in the same direction, and the angle between the axes is preferably 20° or less, more preferably 10° or less, and further preferably 5° or less. Further, "substantially the same length" means that, for example, in a pellet-shaped molding material, the reinforcing fiber bundle (A) is not cut in the middle of the interior of the pellet, or the reinforcing fiber bundle (A) that is significantly shorter than the entire length of the pellet is not substantially contained. In particular, although the amount of the reinforcing fiber bundles (A) shorter than the total length of the pellet is not specified, in case where the content of the reinforcing fibers having a length of 50% or less of the total length of the pellet is 30% by mass or less, such a case is evaluated as a state that the reinforcing fiber bundle (A) significantly shorter than the total length of the pellet is not substantially contained. Furthermore, it is preferred that the content of reinforcing fibers having a length of 50% or less of the total length of the pellet is 20% by mass or less. Where, the total length of the pellet is the length of the pellet in the direction parallel to the orientation direction of the reinforcing fibers in the pellet. By the condition where the reinforcing fiber bundle (A) has substantially the same length as the molding material, the reinforcing fiber length in a molded article can be increased, and excellent mechanical properties can be obtained.

There is no particular limitation on the length of the molding material, and it can be used depending upon the molding method even if it is in a continuous or long condition. For example, it is formed as a thermoplastic yarn prepreg, and it can be wound around a mandrel while being heated to obtain a roll-like molded article. Further, it is also possible to manufacture a unidirectional thermoplastic prepreg by aligning a plurality of molding materials of the present invention in one direction and heating and fusing them. On the other hand, from the viewpoint of handling ability, the molding material is preferably a long fiber pellet of 1 to 50 mm. It is more preferably 3 to 20 mm , most preferably 5 to 10 mm. By making a long fiber pellet having such a length, a pellet for injection molding with a high versatility can be obtained, the handling ability during molding can be sufficiently improved, and because stable feed is achieved during molding, the generation of gas can be reduced.

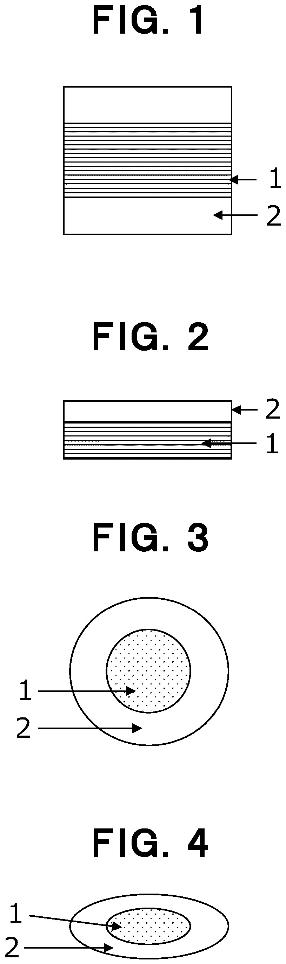

Figs. 1 and 2 schematically show the cross-sectional shapes of the molding materials of the present invention in the axial directions, and Figs. 3 to 5 schematically show the cross-sectional shapes of the molding materials of the present invention in directions perpendicular to the axial directions.

The cross-sectional shape of the molding material is not limited to those shown in the figures, but preferably as shown in Fig. 1 illustrating the cross-sectional shape in the axial direction, a configuration in which the reinforcing fiber bundle (A) becomes a core material and it is sandwiched by the polyphenylene sulfide (B) and arranged in a layered form is preferred.

Further, as shown in Figs. 3 to 5 illustrating the cross-sectional shapes in directions perpendicular to the axial directions, it is preferred that the reinforcing fiber bundle (A) is formed as a core structure and the polyphenylene sulfide (B) is formed as a sheath structure. The molding material preferably has a core-sheath structure in which the polyphenylene sulfide (B) coats the circumference of the reinforcing fiber bundle (A). By preparing the molding material having such a structure, the reinforcing fiber bundle can be left in the molded article for a long time when the molding material is molded, and the mechanical properties, which is an effect of the present invention, can be enhanced. Furthermore, it may be a multi-core-sheath structure in which a plurality of reinforcing fiber bundles (A) are arranged so as to be coated with the polyphenylene sulfide (B), and in this case, the number of reinforcing fiber bundles (A) is preferably two or more and 6 or less. Where, in case where the molding material contains a composite comprising the reinforcing fiber bundle ( A) and the resin (C), the above-described "reinforcing fiber bundle (A)" is read as a "composite", and the "1: reinforcing fiber bundle (A)" in Figs. 1 to 6 is read as "composite".

The molding material can be obtained as a final molding material, for example, by a method such as injection molding or press molding by kneading the polyphenylene sulfide (B) to a composite comprising the reinforcing fiber bundle (A) and an impregnation resin. From the viewpoint of handling ability of the molding material, it is preferred that the composite and the polyphenylene sulfide (B) do not separate and that the polyphenylene sulfide (B) keeps the form of coating the composite until molding is performed. Because the impregnation resin has a low molecular weight, it is often a relatively brittle and friable solid. For this reason, it is desired that the polyphenylene sulfide (B) is arranged so as to protect the composite, so that the impregnation resin is not crushed and scattered by impacts, abrasions, etc. during transportation and handling of the material until molding.

[Reinforcing fiber bundle (A)]

The reinforcing fiber bundle (A) in the present invention indicates a state in which single fibers are arranged in one direction. As the form of the reinforcing fiber bundle (A), although unidirectional fiber bundles, bidirectional fiber bundles, multidirectional fiber bundles and like are exemplified, unidirectional fiber bundles can be used more preferably from the viewpoint of productivity in a process for producing the molding material. The number of single fibers in the reinforcing fiber bundle (A) is preferably 10,000 or more because the greater the number of single fibers of the reinforcing fibers, the more economically advantageous. On the other hand, since the impregnation property of the matrix resin tends to be disadvantageous as the number of single fibersof the reinforcing fibers increases, the number is more preferably 15,000 or more and 100,000 or less from the viewpoint of achieving both of economic efficiency and impregnation property, and particularly preferably 20,000 or more and 50,000 or less can be used.

The kind of reinforcing fibers forming the reinforcing fiber bundle (A) is not particularly restricted, and for example, carbon fibers, glass fibers, aramid fibers, alumina fibers, silicon carbide fibers, boron fibers, metal fibers, natural fibers, mineral fibers and the like can be used, and these may be used alone or in combination of two or more. Among them, PAN (polyacrylonitrile)-based, pitch-based, and rayon-based carbon fibers are preferably used from the viewpoint of obtaining a molded article which is lightweight, and has a high strength and a high elastic modulus. In particular, from the viewpoint of high strength, a reinforcing fiber having a tensile strength of 4,000 MPa or more is preferable, and 5,000 MPa or more is more preferable. From the viewpoint of high elastic modulus, a reinforcing fiber having a tensile elastic modulus of 200 GPa or more is preferable, and 400 GPa or more is more preferable. In particular, a reinforcing fiber having an elastic modulus of 400 GPa or more, which is difficult to maintain a long fiber length, is preferable because it can more highly exhibit the effects of the molding material of the present invention, which will be described later.

Further, from the viewpoint of improving the economic efficiency of a molded article to be obtained, glass fibers can be preferably used, and it is particularly preferable to use carbon fibers and glass fibers in combination from the viewpoint of the balance between mechanical properties and economic efficiency. Furthermore, aramid fibers can be preferably used from the viewpoint of improving the impact absorption and formability of a molded article to be obtained, and it is particularly preferable to use carbon fibers and aramid fibers in combination from the viewpoint of the balance between mechanical properties and impact absorption. Further, from the viewpoint of enhancing the conductivity of a molded article to be obtained, reinforcing fibers coated with a metal such as nickel, copper, or ytterbium, or pitch-based carbon fibers can also be used.

It is preferred that a sizing agent is attached to the reinforcing fiber bundle (A). By attaching a sizing agent to the reinforcing fiber bundle (A), it is possible to improve the handling ability of the reinforcing fibers during transportation and the processability in the process of producing the molding material. The kind of the sizing agent is not particularly limited, but sizing agents such as epoxy resins, urethane resins, acrylic resins, and various thermoplastic resins can be used alone or in combination of two or more.

The reinforcing fiber bundle (A) is preferably 1% by mass or more and 50% by mass or less with respect to the total amount (100% by mass) of the molding material. More preferably, it is 10% by mass or more and 30% by mass or less. If the content of the reinforcing fiber bundle (A) is less than 1% by mass, the mechanical properties of the resulting molded article may be insufficient, and if it exceeds 50% by mass, the amount of gas generated originating from the reinforcing fibers or the sizing agent adhering to the reinforcing fibers may increase.

[Polyphenylene sulfide (B)]

The melting point of the polyphenylene sulfide (B) in the present invention is 270°C or less. The melting point of the polyphenylene sulfide (B) can be determined from the temperature at the apex of the melting peak in differential scanning calorimetry. In case where two or more kinds of polyphenylene sulfides are used and a mixture thereof exhibits a single melting peak, the melting point can be determined from the apex of the melting peak. On the other hand, in case where two or more kinds of polyphenylene sulfides are used and a plurality of melting peaks are observed, the melting point is determined from the apexes of the respective melting peaks.

By the condition where the melting point is 270°C or less, the molding temperature can be lowered, and the generation of gas during molding can be suppressed. In addition, it is possible to improve the economic efficiency. In particular, in case where the molding material contains an impregnation resin or the reinforcing fiber has a sizing agent attached to it, because the decomposition of the impregnation resin or the sizing agent can be suppressed during the molding process, it becomes possible to select an impregnation resin or a sizing agent having a relatively low heat resistance. Namely, it becomes possible to increase the degree of freedom in designing the impregnation resin and the sizing agent, and the degree of freedom in selecting the impregnation resin and the sizing agent.

In the present invention, the melting point of the polyphenylene sulfide (B) is more preferably 260°C or less. By the condition where the melting point of the polyphenylene sulfide (B) is 270°C or less, the molding temperature can be lowered, and the decomposition gas during molding is suppressed and the economic efficiency is excellent. In particular, in case where the molding material contains an impregnation resin or the reinforcing fiber is attached with a sizing agent, the decomposition of the impregnation resin or the sizing agent can be suppressed, and it becomes possible to increase the degree of freedom of the impregnation resin or the sizing agent. Further, from the viewpoint of heat resistance, the melting point of the polyphenylene sulfide (B) is preferably 240°C or more. The melting point of polyphenylene sulfide (B) is determined as follows.

[1] A sample is heated from 40°C to 340°C at a temperature elevation rate of 20°C/min using a differential scanning calorimeter.

[2] After elevating the temperature in [1], lower the temperature of the sample is lowered from 340°C to 40°C at a temperature lowering rate of 20°C/min.

[3] After lowering the temperature in [2], the sample is again heated from 40°C to 340°C at a temperature elevation rate of 20°C/min.

The apex of the melting peak observed in the heating process of [3] described above is taken as the melting point.

In the present invention, the method for controlling the melting point of the polyphenylene sulfide (B) to 270°C or less is not particularly limited, but exemplified are a method of copolymerizing a polyphenylene sulfide mainly formed of a para-phenylene sulfide skeleton with a meta-phenylene sulfide and/or an ortho-phenylene sulfide. a method of block-copolymerizing another polymer at the end of polyphenylene sulfide, a method of reducing molecular mobility by oxidative cross-linking of polyphenylene sulfide, and the like. In case where another polymer is block-copolymerized at the end of polyphenylene sulfide, there is no restriction on another polymer, and exemplified are polyesters, polyamides, polyimides, polyamideimides, polyetherimides, polyarylates, polysulfones, polyethersulfones, polyketones, polyether ketones, polyether ether ketones, polythioether ketones, polytetrafluoroethylenes, polyorganosiloxanes, thermoplastic polyurethane resins, high density polyethylenes, low density polyethylenes, linear low density polyethylenes, polypropylenes, esters polyacrylate, esters polymethacrylate, poly-1-butenes, poly-1-pentenes, polymethyl pentenes, polyolefins such as ethylene/$\alpha$-olefin copolymers.

Among them, in the present invention, the polyphenylene sulfide (B) is preferably a polyphenylene sulfide obtained by copolymerizing para-phenylene sulfide and meta-phenylene sulfide. Namely, in the present invention, the polyphenylene sulfide (B) preferably contains para-phenylene sulfide units and meta-phenylene sulfide units. In the present invention, the content of the meta-phenylene sulfide units is preferably 7 mol% or more with respect to the total amount of the para-phenylene sulfide units and the meta-phenylene sulfide units. It is more preferably 8 mol% or more, further preferably 10 mol% or more, and particularly preferably 10.5 mol% or more. By controlling the content of the meta-phenylene sulfide units to 7 mol% or more, the melting point of the polyphenylene sulfide can be lowered, the crystallization rate of the polyphenylene sulfide (B) is lowered, and the flowability is improved. On the other hand, in case where the content of the meta-phenylene sulfide units is less than 7 mol%, the melting point of the polyphenylene sulfide may not be lowered sufficiently.

The upper limit of the content of the meta-phenylene sulfide units in the polyphenylene sulfide is not particularly restricted, but it is preferably 20 mol% or less, more preferably 14 mol% or less. If the content of the meta-phenylene sulfide units is 20 mol% or less, in addition to achieving mechanical properties, mold releasability during molding is improved, and molding cycle performance is improved. Further, if the content is 14 mol% or less, in addition to achieving both excellent flowability and mechanical properties, mold releasability during molding is improved, and molding cycle performance can be enhanced. On the other hand, in case where the content of the meta-phenylene sulfide units is more than 20 mol%, the inherent heat aging resistance and chemical resistance of the polyphenylene sulfide may be lowered, which may be undesirable.

Further, in case where the molding material is in the form that the polyphenylene sulfide (B) coats a part or all of the circumference of the strand-like composite, if the content of the meta-phenylene sulfide units is 7 mol% or more, crystallization of the polyphenylene sulfide (B) coating the composite is suppressed, the polyphenylene sulfide (B) is less likely to break, and a molding material with an excellent handling ability can be obtained. Then, as aforementioned, by improving the handling ability of the molding material, it is possible to suppress variations in the mechanical properties of the molded article, improve the surface smoothness, suppress the deterioration of the flowability of the molding material, and improve the flowability.

From such a reason, even when the strand in which the composite is coated with the polyphenylene sulfide (B) is cut to form a pellet-like molding material, if the content of meta-phenylene sulfide units is 7 mol% or more, because the polyphenylene sulfide (B) is difficult to be broken, such a condition is preferred. Further, by controlling the content of meta-phenylene sulfide units to 7 mol% or more to improve the flowability, it is possible to reduce the shear stress applied to the reinforcing fibers during kneading or molding, and the fiber length of the reinforcing fiber bundle (A) in a molded article can be kept long. In particular, because the effects of the molding material of the present invention can be exhibited more for reinforcing fibers having an elastic modulus of 350 GPa or more, which are difficult to maintain long fiber lengths, the above-described condition is preferred.

The meta-phenylene sulfide units of the polyphenylene sulfide (B) is determined using a Fourier transform infrared spectrometer (hereinafter, abbreviated as FT-IR). Concretely, the content of the meta-phenylene sulfide units is calculated from the magnitude of the absorption peak of the meta-phenylene sulfide units at 780 cm$^{-1}$.

The crystallization temperature during cooling of the polyphenylene sulfide (B) is preferably 190°C or less. More preferably, it is 170°C or less. By the condition where the crystallization temperature during cooling of the polyphenylene sulfide (B) is 190°C or less, the crystallization speed becomes slow and the flowability during molding is excellent. On the other hand, the lower limit of the crystallization temperature during cooling of the polyphenylene sulfide (B) is preferably 140°C from the viewpoint of mechanical properties and surface quality of a molded article. The crystallization temperature during cooling of the polyphenylene sulfide (B) was determined using a differential scanning calorimeter, and when elevating the temperature from 40°C to 340°C at a rate of 20°C/min and then lowering the temperature from 340°C to 40°C at a rate of 20°C/min, the apex of the temperature-cooling crystallization peak at the time of cooling is defined as the crystallization temperature during cooling.

The method of controlling the crystallization temperature during cooling of the polyphenylene sulfide (B) to 190°C or less is not particularly limited, but exemplified are a method of copolymerizing meta-phenylene sulfide and/or ortho-phenylene sulfide with polyphenylene sulfide mainly formed of a para-phenylene sulfide skeleton, a method of block-copolymerizing another polymer at the end of polyphenylene sulfide, a method of reducing molecular mobility by oxidative cross-linking of polyphenylene sulfide, and the like.

The difference between the melting point and the crystallization temperature during cooling of the polyphenylene sulfide (B) is preferably 80°C or more. More preferably, it is 90°C or more. The difference between the melting point and the crystallization temperature during cooling indicates a temperature until the resin having been in a molten state under cooling crystallizes and solidifies. Therefore, a large difference between the melting point and the crystallization temperature during cooling means that the solidification of the resin slows down. By the condition where the difference between the melting point and the crystallization temperature during cooling of the polyphenylene sulfide (B) is 80°C or more, the solidification slows down and the transferability of the mold surface improves, so the surface smoothness is improved, which is preferred, and it is possible to reduce the molding pressure at the time of molding. On the other hand, from the viewpoint of the mechanical properties and surface quality of the molded article, the upper limit of the difference between the melting point and the crystallization temperature during cooling of the polyphenylene sulfide (B) is preferably 120°C.

Although the method for controlling the difference between the melting point and the crystallization temperature during cooling of the polyphenylene sulfide (B) to 80°C or more is not particularly limited, exemplified are a method of copolymerizing meta-phenylene sulfide and/or ortho-phenylene sulfide with polyphenylene sulfide mainly formed of a para-phenylene sulfide skeleton, a method of block-copolymerizing another polymer at the end of polyphenylene sulfide, a method of reducing molecular mobility by oxidative cross-linking of polyphenylene sulfide, and the like.

It is preferred that the polyphenylene sulfide (B) contains a homo-polyphenylene sulfide composed of only para-phenylene sulfide units and a copolymerized polyphenylene sulfide comprising para-phenylene sulfide units and meta-phenylene sulfide units. By containing the homo-polyphenylene sulfide and the copolymerized polyphenylene sulfide, it is possible to increase the crystallinity of the polyphenylene sulfide while reducing the amount of gas generated during molding, and it is more achievable to improve both of the surface smoothness and the mechanical properties, and both of the flowability and the molding cycle performance.

The content of the polyphenylene sulfide (B) relative to the total amount (100% by mass) of the molding material is preferably 30% by mass or more and 98.9% by mass or less, more preferably 40% by mass or more and 94.5% by mass or less, and further preferably 50% by mass or more and 89% by mass or less. By adjusting the content within such a range, a molding material having excellent moldability and handling ability can be obtained. Further, excellent mechanical properties can be imparted to the molded article. If the content of the polyphenylene sulfide (B) is less than 30% by mass, because the amount of the polyphenylene sulfide resin (B) contained in the molding material is small, the reinforcing fiber bundle (A) and the polyphenylene sulfide resin (B) may not be sufficiently melt kneaded during molding, or the flowability may decrease during injection molding. In that case, the reinforcing fiber bundles (A) cannot be sufficiently dispersed in the molded article, and molding may become difficult, which is not preferable.

Further, if the content of the polyphenylene sulfide (B) exceeds 98.9% by mass, because the amount of the reinforcing fiber bundle (A) contained in the molding material becomes relatively small, the fiber reinforcing effect may become insufficient, the mechanical properties of the obtained molded article may become insufficient, which is not preferable. Further, in the molding material, in case where the polyphenylene sulfide (B) takes the form of coating a part or all of the circumference of the strand-like composite, and the polyphenylene sulfide (B) is less than 30% by mass, because the amount of the polyphenylene sulfide (B) is small, the coating layer becomes thin, and the molding material may become easily cracked, and the handling ability may deteriorate, which is not preferable.

The molecular weight of the polyphenylene sulfide (B) is preferably 10,000 or more, more preferably 20,000 or more, particularly preferably 30,000 or more, in terms of weight average molecular weight, from the viewpoint of the mechanical properties of a molded article obtained by molding the molding material. This is advantageous from the viewpoint that the higher the weight average molecular weight, the higher the strength and the elongation of the matrix resin. On the other hand, the upper limit of the weight average molecular weight is not particularly limited, but from the viewpoint of flowability during molding, for example, it is preferably 1,000,000 or less, and more preferably 500,000 or less. Where, the weight average molecular weight can be determined using a general GPC (gel permeation chromatography) such as the aforementioned SEC (size exclusion chromatography).

Furthermore, the polyphenylene sulfide (B) may be added, in accordance with its use, with fillers such as mica, talc, kaolin , hydrotalcite, sericite, bentonite, xonotlite, sepiolite, smectite, montmorillonite, wollastonite, silica, calcium carbonate, glass beads, glass flakes, glass micro balloons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers and polymer compounds; conductivity imparting materials such as metals, metal oxides, carbon black and graphite powder; halogen-based flame retardants such as brominated resins; antimony-based flame retardants such as antimony trioxide and antimony pentoxide; phosphorus-based flame retardants such as ammonium polyphosphate, aromatic phosphates and red phosphorus; organic acid metal salt-based flame retardants such as boric acid metal salts, carboxylic acid metal salts and aromatic sulfonimide metal salts; inorganic flame retardants such as zinc borate , zinc, zinc oxide and zirconium compounds; cyanuric acid, nitrogen-based flame retardants such as isocyanuric acid, melamine, melamine cyanurate, melamine phosphate and nitrogenated guanidine; fluorine-based flame retardants such as PTFE; silicone-based flame retardants such as polyorganosiloxane: metal hydroxide-based flame retardants such as aluminum hydroxide and magnesium hydroxide; other flame retardants; flame retardant aids such as cadmium oxide, zinc oxide, cuprous oxide, cupric oxide, cuprous oxide iron, ferric oxide, cobalt oxide, manganese oxide, molybdenum oxide, tin oxide and titanium oxide; pigments; dyes; lubricants; release agents; compatibilizers; dispersants; crystal nucleating agents such as mica, talc and kaolin; plasticizers such as phosphate esters; heat stabilizers; antioxidants; anti-coloring agents; UV absorbers; flowability modifiers; foaming agents; antibacterial agents; damping agents; deodorants; sliding property modifiers; antistatic agents such as polyether ester amides, and the like.

[Resin (C) (impregnation resin)]

The resin (C) (impregnation resin) is preferably one or more resins selected from the group consisting of an epoxy resin, a phenolic resin and a terpene resin.

By filling the above-described impregnation resin between the single fibers of the reinforcing fiber bundle (A) in the molding material, it is possible to improve the dispersibility of the reinforcing fibers when molding the molding material.

Further, the impregnation resin preferably has a melt viscosity lower than that of the polyphenylene sulfide (B). By the condition where the melt viscosity of the impregnation resin is lower than that of the polyphenylene sulfide (B), when molding the molding material, the flowability of the impregnation resin is high and the effect of dispersing the reinforcing fiber bundles into the polyphenylene sulfide (B) can be further improved. By using one or more resins selected from the group consisting of an epoxy resin, a phenolic resin, and a terpene resin as the impregnation resin, the melt viscosity of the impregnation resin can be made lower than that of the polyphenylene sulfide (B), and because the dispersibility of the reinforcing fiber bundles in the molded article can be improved, the surface smoothness can be improved while improving the mechanical properties of the molded article molded from the molding material of the present invention.

The impregnation resin preferably has a high affinity with the polyphenylene sulfide (B). By selecting an impregnation resin having a high affinity with the polyphenylene sulfide (B), because it efficiently dissolves with the polyphenylene sulfide (B) during the production and molding of the molding material, the dispersibility of reinforcing fibers can be further improved.

The melt viscosity at 200°C of the impregnation resin is preferably 0.01 to 10 Pa·s. If the melt viscosity at 200°C is 0.01 Pa·s or more, breakage occurred from a starting point of the impregnation resin can be more suppressed, and the impact strength of the molded article can be more improved. The melt viscosity is more preferably 0.05 Pa·s or more, and further preferably 0.1 Pa·s or more. On the other hand, if the melt viscosity at 200°C is 10 Pa·s or less, the impregnation resin is easily impregnated up to the inside of the reinforcing fiber bundle (A). Therefore, when molding the molding material of the present invention, the dispersibility of reinforcing fibers can be more improved. The melt viscosity is preferably 5 Pa-s or less, more preferably 2 Pa-s or less. The melt viscosity of the impregnation resin at 200°C can be measured by a viscoelastic meter using 40 mm parallel plates at 0.5 Hz.

The impregnation resin preferably has a number average molecular weight of 200 to 5,000. If the number average molecular weight is 200 or more, the flexural strength and tensile strength of the molded article can be more improved. More preferably, the number average molecular weight is 1,000 or more. Further, if the number average molecular weight is 5,000 or less, because the viscosity of the impregnation resin is moderately low, it has excellent impregnation property into the reinforcing fiber bundle (A) and more improves the dispersibility of the reinforcing fibers in the molded article. More preferably, the number average molecular weight is 3,000 or less. Where, such a number average molecular weight of the impregnation resin can be determined using gel permeation chromatography (GPC).

The impregnation resin preferably has a weight loss on heating of 5% by weight or less when heated at 280°C for 30 minutes in nitrogen. More preferably, it is 3% by weight or less. In case where the weight loss on heating is 5% by weight or less, the generation of decomposition gas can be suppressed when impregnated into the reinforcing fiber bundle (A), and the generation of voids and poor surface appearance can be suppressed when molded. Further, especially in molding at a high temperature, the generated gas can be suppressed.

Where, the term "weight loss on heating" used in the present invention refers to a weight loss rate of the impregnation resin before and after heating under the above-described heating condition, with the weight of the impregnation resin before heating being taken as 100%, and can be determined by the following equation. Where, the weights before and after heating can be determined by measuring the weight at the molding temperature by thermogravimetric analysis (TGA) using a platinum sample pan in an air atmosphere at a temperature elevation rate of 10 °C/min.

$$\text{(Weight loss on heating) [\% by weight]} = \{\text{(weight before heating - weight after heating)} / \text{weight before heating}\} \times 100$$

In the present invention, the epoxy resin preferably used as the impregnation resin refers to a compound having two or more epoxy groups, which does not substantially contain a curing agent, and even when heated, which is not cured due to so-called three-dimensional cross-linking. By having epoxy groups, the epoxy resin becomes easy to interact with the reinforcing fiber, and it is easy to attach to the reinforcing fiber bundle (A) during impregnation and easy to impregnate. Further, the dispersibility of the reinforcing fibers during molding is more improved.

Further, in the present invention, as the epoxy resins, for example, exemplified are glycidyl ether type epoxy resins, glycidyl ester type epoxy resins, glycidyl amine type epoxy resins, and alicyclic epoxy resins. 2 or more types of these may be used. As the glycidyl ether type epoxy resins, for example, exemplified are bisphenol A type epoxy resin, bisphenol F type epoxy resin, bisphenol AD type epoxy resin, halogenated bisphenol A type epoxy resin, bisphenol S type epoxy resin, resorcinol type epoxy resin, hydrogenated bisphenol A type epoxy resin, phenol novolac type epoxy resin, cresol novolac type epoxy resin, aliphatic epoxy resin having an ether bond, naphthalene-type epoxy resin, biphenyl type epoxy resin, biphenyl aralkyl type epoxy resin, dicyclopentadiene type epoxy resin, etc. As the glycidyl ester type epoxy resins, for example, exemplified are glycidyl ester hexahydrophthalate, dimer acid diglycidyl ester, etc. As the glycidyl amine type epoxy resins, for example, exemplified are triglycidyl isocyanurate, tetraglycidyl diamino diphenylmethane, tetraglycidyl metaxylene diamine, aminophenol type epoxy resins, etc. As the alicyclic epoxy resins, for example, exemplified are 3,4-epoxy-6-methylcyclohexyl methyl carboxylate, 3,4-epoxy cyclohexyl methyl carboxylate, etc. Among them, glycidyl ether type epoxy resins are preferred, and bisphenol A type epoxy resins and bisphenol F type epoxy resins are more preferred, because they are excellent in balance between viscosity and heat resistance.

A phenolic resin is a resin having a phenol skeleton, may have a substituent group, and may be cresol or naphthol. As the phenolic resin, concretely, exemplified are phenol novolac resin, o-cresol novolac resin, phenol aralkyl resin, naphthol novolac resin, naphthol aralkyl resin, and the like. Among them, o-cresol novolac resin is preferably used because it has an excellent balance of heat resistance and handleability such as melt viscosity, so that it can make the taking-up speed of the composite faster and can maintain the flame resistance higher.

The melting point of the phenolic resin is not particularly limited, but preferably exceeds 80°C from the viewpoint of improving the heat resistance and handling ability of the molding material and suppressing bleeding out during a long-term storage of the molding material. More preferably, it exceeds 100°C, and further preferably exceeds 120°C. Although the upper limit of the melting point is not particularly limited, the melting point of the phenolic resin can be determined by DSC measurement. Concretely, it can be determined from the value of the endothermic peak apex measured under the condition of temperature elevation of 40°C/min.

As the terpene resin, exemplified is a resin comprising a polymer obtained by polymerizing a terpene monomer alone, or a resin comprising a copolymer obtained by copolymerizing a terpene monomer and an aromatic monomer, etc., in the presence of a Friedel-Crafts-type catalyst in an organic solvent.

As the terpene monomers, exemplified are α-pinene, β-pinene, dipentene, d-limonene, myrcene, alloocimene, ocimene, α-phellandrene, α-terpinene, γ-terpinene, terpinolene, 1,8-cineol, 1,4-cineol, α-terpineol, β-terpineol, γ-terpineol, sabinene, and monocyclic type monoterpenes such as para-mentadienes and carenes. Further, as the aromatic monomers, exemplified are styrene, α-methyl styrene, and the like.

Among them, α-pinene, β-pinene, dipentene and d-limonene are preferred from the viewpoint of compatibility, and further sole polymers of these compounds are more preferred. Further, a hydrogenated terpene-based resin obtained by hydrogenating the terpene-based resin is more preferable from the viewpoint of compatibility.

Further, as the terpene resin, a terpene phenol resin obtained by reacting a terpene monomer and a phenol in the presence of a catalyst can also be used. Here, as the phenol, one having 1 to 3 substituents of at least one selected from the group consisting of an alkyl group, a halogen atom and a hydroxyl group on the benzene ring of phenol is preferably used. As the concrete examples, exemplified are cresol, xylenol, ethyl phenol, butyl phenol, t-butyl phenol, nonyl phenol, 3,4,5-trimethyl phenol, chlorophenol, bromophenol, chlorocresol, hydroquinone, resorcinol, orcinol and the like. 2 or more types of these may be used. Among these, phenol and cresol are preferred.

The number average molecular weight of the terpene-based resin and the terpene-phenolic resin is preferably 100 to 5,000. More preferably, it is 500 to 1,000. If the number average molecular weight is 100 or more, the weight loss on heating of the terpene-based resin is reduced, which is preferable because the dispersibility of the reinforcing fiber bundles (A) in the molded article is improved. Further, if the number average molecular weight is 5,000 or less, the viscosity of the terpene resin is lowered, so that the impregnation property into the reinforcing fiber bundle (A) and the fiber dispersibility during molding are improved, which is preferable.

The content of the resin (C) (impregnation resin) is preferably 0.1% by mass or more and 20% by mass or less, more preferably 3% by mass or more and 10% by mass or less, relative to the total amount (100% by mass) of the molding material. By the content within such a range, a molding material excellent in moldability and handling ability can be obtained. If the content of the impregnation resin is less than 0.1% by mass, the impregnation into the reinforcing fiber bundle (A) may be insufficient, and the handling ability of the resulting molding material may become insufficient, which is not preferred. On the other hand, if it exceeds 20% by mass, because the amount of low-molecular-weight components contained in the molded article becomes relatively large, the molded article becomes brittle and the mechanical properties are lowered, which is not preferred.

The molding material of the present invention is kneaded, for example by injection molding, into a final molded article. By controlling the content of the resin (C) within the above-described numerical range, the handling ability of the molding material can be improved, as a result, it is possible to suppress fluctuation of the mechanical properties of the molded article and improve the surface smoothness of the molded article, and further, to suppress deterioration of the flowability of the molding material or to improve the flowability. Further, excellent mechanical properties can be imparted to the obtained molded article.

[Additives to molding material]

It is preferred that the molding material of the present invention further contains 0.1 to 10% by mass of a compound having two or more of at least one structure selected from a carbodiimide structure, a urea structure and a urethane structure in one molecule, from the viewpoint of further enhancing the affinity between the reinforcing fiber bundle (A) and the polyphenylene sulfide (B) and improving the tensile properties of the resulting molded article. The blending amount is preferably 0.3 to 8% by mass, and particularly preferably 0.5 to 5% by mass considering the generation of decomposition gas during kneading with the matrix resin.

As the compounds having a carbodiimide structure, that is, as the carbodiimide compounds, there are polycarbodiimides including an aliphatic polycarbodiimide and an aromatic polycarbodiimides, and the aliphatic polycarbodiimide is preferably used from the viewpoint of affinity and reactivity.

An aliphatic polycarbodiimide compound is a homopolymer or a copolymer that has repeating units represented by a general formula -N=C=N-R3- (in the formula, R3 is a divalent organic group of an alicyclic compound such as cyclohexylene, or a divalent organic group of an aliphatic compound such as methylene, ethylene, propylene, methyl ethylene) as its main structural unit, preferably containing the repeating units at 70 mol% or more, more preferably 90 mol% or more, further preferably 95 mol % or more.

As the compound having a urea structure, one obtained by reacting a diisocyanate with a diamine containing a compound containing a plurality of amino groups (for example, hydrazine, dihydrazide, etc.) can be used. Alternatively, a polyurea can be synthesized by reacting an isocyanate with water to form an unstable carbamic acid. Carbamic acid decomposes to generate carbon dioxide and forms amino groups forming urea crosslinks by immediately reacting with excessive isocyanate. Alternatively, it can be obtained by treating a compound having a carbodiimide structure with water to react the carbodiimide to urea .

As the compound having a urethane structure, one obtained by reacting bischloroformate with diamine can be used. Alternatively, a polyurethane can be synthesized by reacting a diisocyanate with a diol such as a macroglycol, a polyol, or a combination of a macroglycol and a single chain glycol extender.

Among the above-described compounds, polycarbodiimide is preferably used from the viewpoint of interfacial adhesion with the reinforcing fiber bundle (A).

<Molded article>

The molded article of the present invention is a molded article containing a reinforcing fiber and a polyphenylene sulfide, wherein a weight average fiber length of the reinforcing fiber is 0.3 mm or more and 3.0 mm or less, and a melting point of the polyphenylene sulfide is 270°C or less. Further, the molded article of the present invention is a molded article containing a reinforcing fiber and a polyphenylene sulfide, wherein a weight average fiber length of the reinforcing fiber is 0.3 mm or more and 3.0 mm or less, and a crystallization temperature during cooling of the polyphenylene sulfide is 190°C or less.

[Reinforcing fiber contained in molded article]

The weight average fiber length of the reinforcing fiber contained in the molded article is 0.3 to 3.0mm. More preferably, it is 0.5 to 2.8 mm. Further preferably, it is 0.8 to 2.5 mm. By controlling the weight average fiber length of the reinforcing fiber to 0.3 mm or more, the mechanical properties of the molded article can be sufficiently exhibited. On the other hand, in case where the weight average fiber length of the reinforcing fiber exceeds 3.0 mm, the fiber pattern of the reinforcing fiber tends to remarkably appear on the surface of the molded article, and a waviness originating from the reinforcing fibers occurs on the surface of the molded article, and it may cause a poor appearance, which is not preferred. Therefore, by controlling the weight average fiber length of the reinforcing fiber to 3.0 mm or less, such a waviness can be suppressed and the surface appearance of the molded article can be improved.

The kind of reinforcing fiber is not particularly limited, and the reinforcing fiber described in the explanation of the reinforcing fiber bundle in the molding material can be exemplified. Further, the preferred kinds and combinations of reinforcing fibers are the same, and the reasons for their preference are also the same.

The content of the reinforcing fibers is preferably 1 to 50% by mass with respect to 100% by mass of the molded article. More preferably, it is 10 to 30% by mass. If the content of the reinforcing fibers is less than 1% by mass, the resulting molded article may have insufficient mechanical properties, and if it exceeds 50% by mass, the appearance of the molded article may become poor.

It is preferred that a sizing agent adheres to the reinforcing fibers. By making the sizing agent adhere to the reinforcing fibers, the mechanical properties of the molded article can be improved. Although the kind of the sizing agent is not particularly limited, sizing agents such as epoxy resins, urethane resins, acrylic resins, and various thermoplastic resins can be used alone or in combination of two or more.

[Polyphenylene sulfide contained in molded article]

The polyphenylene sulfide resin contained in the molded article in the present invention preferably has a melting point of 270°C or less. By controlling the melting point to 270°C or less, molding can be performed at a molding temperature lower than that of conventional polyphenylene sulfide resins. By this, thermal decomposition of the impregnation resin, sizing agent, and other additives contained in the molding material, that is, generation of gas, can be suppressed.

As a method for controlling the melting point of the polyphenylene sulfide resin to 270°C or less, a polyphenylene sulfide resin having a desired melting point can be obtained by appropriately adjusting the aforementioned method. In the present invention, the melting point of the polyphenylene sulfide (B) is more preferably 260°C or less. From the viewpoint of heat resistance, the melting point of the polyphenylene sulfide (B) is preferably 240°C or more.

Further, the polyphenylene sulfide resin contained in the molded article of the present invention preferably contains a homo-polyphenylene sulfide composed of only para-phenylene sulfide units and a copolymerized polyphenylene sulfide comprising para-phenylene sulfide units and meta-phenylene sulfide units. By using homo-polyphenylene sulfide and copolymerized polyphenylene sulfide, the crystallization speed and the crystallization temperature during cooling can be appropriately controlled. Namely, since the solidification speed of the molded article can be controlled, for example, a rapid solidification and an extreme delay in solidification in a mold during injection molding can be suppressed, and as a result, the flowability of the resin during molding can be ensured. Further, the cycle time can be maintained.

Further, by the condition where the above-described polyphenylene sulfide resin contains a homo-polyphenylene sulfide composed of only para-phenylene sulfide units and a copolymerized polyphenylene sulfide comprising para-phenylene sulfide units and meta-phenylene sulfide units, the crystallinity of the polyphenylene sulfide resin can be controlled. Since the crystallinity of the polyphenylene sulfide resin can be enhanced by appropriately adjusting the blending amount of the polyphenylene sulfide resin in the manner aforementioned, for example, the crystallinity of the polyphenylene sulfide resin in the molded article obtained by injection molding can be increased, and the mechanical properties can be improved.

The above-described polyphenylene sulfide resin may contain a homo-polyphenylene sulfide composed of only para-phenylene sulfide units and a copolymerized polyphenylene sulfide comprising para-phenylene sulfide units and meta-phenylene sulfide units. For example, by a method in which homo-polyphenylene sulfide pellets composed of only para-phenylene sulfide units and copolymerized polyphenylene sulfide pellets comprising para-phenylene sulfide units and meta-phenylene sulfide units are dry blended to obtain mixed pellets in advance (hereinafter, referred to as mixed pellets), and then, the mixed pellets are supplied as the polyphenylene sulfide to a main hopper of a twin-screw extruder, the homo-polyphenylene sulfide composed of only para-phenylene sulfide units and the copolymerized polyphenylene sulfide comprising para-phenylene sulfide units and meta-phenylene sulfide units may be compounded.

The compounding ratio of the homo-polyphenylene sulfide composed of only para-phenylene sulfide units and the copolymerized polyphenylene sulfide comprising para-phenylene sulfide units and meta-phenylene sulfide units is not particularly limited, but the homo-polyphenylene sulfide composed of only para-phenylene sulfide units is preferably 1 to 50 parts by weight and the copolymerized polyphenylene sulfide comprising para-phenylene sulfide units and meta-phenylene sulfide units is preferably 99 to 50 parts by weight with respect to 100 parts by weight of the total of the homo-polyphenylene sulfide composed of only para-phenylene sulfide units and the copolymerized polyphenylene sulfide comprising para-phenylene sulfide units and meta-phenylene sulfide units, and more preferably, the compounding ratio of the homo-polyphenylene sulfide composed of only para-phenylene sulfide units is 5 to 40 parts by weight and the compounding ratio of the copolymerized polyphenylene sulfide comprising para-phenylene sulfide units and meta-phenylene sulfide units is 95 to 60 parts by weight.

If the compounding amount of the homo-polyphenylene sulfide composed of only para-phenylene sulfide units is less than 1 part by weight, the speed of crystallization and the crystallization temperature during cooling cannot be adequately controlled, and the solidification speed of the molded article becomes extremely slow, and therefore, the aforementioned cycle time during injection molding becomes long, which may not be preferable, and if it exceeds 50 parts by weight, because the crystallization speed becomes too fast, the aforementioned solidification speed in the mold during injection molding may become fast, and the flowability is lowered, which may not be preferable.

Furthermore, if the compounding amount of the copolymerized polyphenylene sulfide comprising para-phenylene sulfide units and meta-phenylene sulfide units is less than 50 parts by weight, because the crystallization speed becomes too fast and the aforementioned solidification speed in the mold during injection molding becomes fast and the flowability decreases, which may not be preferable, and further, if it exceeds 99 parts by weight, the crystallization speed and the crystallization temperature during cooling cannot be adequately controlled, and because the solidification speed of the molded article becomes extremely slow, the aforementioned cycle time in injection molding becomes long, which may not be preferable.

Examples:

Hereinafter, the present invention will be explained in more detail with reference to examples. First, evaluation methods used in the present invention are described below.

(1) Determination of melting point and crystallization temperature during cooling of polyphenylene sulfide (B):
The melting point and the crystallization temperature during cooling of the polyphenylene sulfide (B) were determined as follows using a differential scanning calorimeter TA3000 (supplied by Mettler Corporation).

[1] Using a differential scanning calorimeter TA3000 (supplied by Mettler Corporation), a sample was heated from 40°C to 340°C at a temperature elevation rate of 20°C/min.

[2] After elevating the temperature in [1], the temperature of the sample was lowered from 340°C to 40°C at a temperature lowering rate of 20°C/min.

[3] After lowering the temperature in [2], the sample is again heated from 40°C to 340°C at a temperature elevation rate of 20°C/min.

The apex of the melting peak observed in the heating process of [3] described above was taken as the melting point. Further, the apex of the temperature-lowering crystallization peak observed in the temperature lowering process of [2] described above was taken as the crystallization temperature during cooling.

(2) Measurement of tensile strength of molded article:

The tensile strength was measured according to ISO 527 (2012) for an ISO dumbbell test piece prepared by injection molding the molding material. An "Instron (registered trademark)" universal testing machine Model 5566 (supplied by Instron Corporation) was used as the testing machine under conditions of a distance between fulcrums of 114 mm, a tensile speed of 5 mm/min, a temperature of 23°C and a relative humidity of 50%.

(3) Determination of flexural modulus of molded article:

An ISO dumbbell test piece prepared by injection molding the molding material was measured for bending properties according to ISO 178 (1993). Using a three-point bending test jig (indenter radius of 5 mm), the fulcrum distance was set to 64 mm, and the flexural modulus was determined under a test condition of a test speed of 2 mm/min. As the testing machine, an "Instron (registered trademark)" universal testing machine model 5566 (supplied by Instron Corporation) was used.

(4) Determination of weight average fiber length of reinforcing fiber contained in molded article:

A part of an ISO dumbbell test piece prepared by injection molding the molding material was cut out and hot-pressed at 320°C to obtain a film with a thickness of approximately 30 μm. The obtained film was observed with an optical microscope at a magnification of 150 times, at least 400 reinforcing fibers dispersed in the film were randomly extracted, and their lengths were measured up to a unit of 1 μm, and the weight average fiber length was determined by the following equation. Here, the "weight average fiber length" means an average fiber length calculated from the following equation that takes into consideration the contribution of the fiber length, instead of simply taking a number average, by applying the calculation method of the weight average molecular weight to the calculation of the fiber length. However, the following equation is applied when the fiber diameter and density of the reinforcing fibers are constant.

$$\text{weight average fiber length} = \Sigma(M_i^2 \times N_i)/\Sigma(M_i \times N_i)$$

Mi: fiber length (mm)
Ni: number of carbon fibers with fiber length Mi
i: number of measured fibers

(5) Determination of surface smoothness (surface roughness Rz) of molded article:

Rz was determined for the surface of the mold mirror surface side of an ISO dumbbell test piece prepared by injection molding the molding material, using a surface roughness meter (supplied by Tokyo Seimitsu Co., Ltd.). The smaller the Rz, the smaller the surface roughness and the better the surface smoothness.

(Reference Example 1) Preparation of polyphenylene sulfide (B-1) [homo-polyphenylene sulfide composed of only para-phenylene sulfide units]:

Into a 20 liter autoclave equipped with a stirrer, 2,383 g (20.0 mol) of a 47% by mass sodium hydrosulfide aqueous solution, 848 g (20.4 mol) of sodium hydroxide (purity: 96% by mass ), 3,271 g (33 mol) of N -methyl-2-pyrrolidone ( NMP), 541 g ( 6.6 mol) of sodium acetate, and 3,000 g of ion-exchanged water were charged, and gradually heated up to 225°C for about 3 hours while passing nitrogen at a normal pressure, and after distilling off 4,200 g of water and 80 g of NMP, the reaction vessel was cooled down to 150°C. The amount of hydrogen sulfide scattered per 1 mol of charged sodium hydrosulfide was 0.018 mol.

Next, 2,940 g (20 mol) of p-dichlorobenzene (p-DCB) and 2,620 g (26.2 mol) of NMP were added, the reaction vessel was sealed under nitrogen gas, and heated to 227°C at a rate of 0.8°C/min while stirring at 400 rpm, and thereafter, the temperature was elevated to 270°C at a rate of 0.6°C/min, and held at 270°C for 170 minutes. After that, it was cooled down to 180°C at a rate of 0.4°C/min, and then rapidly cooled to near room temperature. The contents were taken out, after being diluted with 10 liters of NMP, the solvent and the solid matter were filtered off with a sieve (80 mesh) , the obtained particles were washed several times with 20 liters of warm water and filtered off, and polyphenylene sulfide (B-1) was obtained. This was dried with hot air at 80°C and dried under reduced pressure at 120°C. The MFR (melt flow rate) of (B-1 ) finally obtained was 600 g/10 minutes.

(Reference Example 2) Preparation of polyphenylene sulfide (B-2) [copolymerized polyphenylene sulfide comprising para-phenylene sulfide units and meta-phenylene sulfide units]:

Polyphenylene sulfide (B-2) was obtained in the same manner as in the above-described Reference Example 1 other than a condition where 2,499 g (17 mol) of p-dichlorobenzene (p-DCB) and 441 g (3 mol) of m-dichlorobenzene (m-DCB) were used instead of 2,940 g (20 mol) of p-dichlorobenzene (p-DCB). The MFR of (B-2) finally obtained was 775 g/10 minutes.

(Reference Example 3) Preparation of polyphenylene sulfide (B-3) [copolymerized polyphenylene sulfide comprising para-phenylene sulfide units and meta-phenylene sulfide units]:

Polyphenylene sulfide (B-3) was obtained in the same manner as in the above-described Reference Example 1 other than a condition where 2,646 g (18 mol) of p-dichlorobenzene (p-DCB) and 294 g (2 mol) of m-dichlorobenzene (m-DCB) were used instead of 2,940 g (20 mol) of p-dichlorobenzene (p-DCB). The MFR of (B-3) finally obtained was 170 g/10 minutes.

(Reference Example 4) Preparation of polyphenylene sulfide (B-4) [homo-polyphenylene sulfide composed of only para-phenylene sulfide units]:

Into a 20 liter autoclave equipped with a stirrer and a bottom valve, 2,383 g (20.0 mol) of 47% by weight aqueous sodium hydrosulfide solution, 831 g (19.9 mol) of sodium hydroxide (purity: 96% by weight), 3,960 g (40.0 mol) of N-methyl-2-pyrrolidone (NMP) and 3,000 g of ion-exchanged water were charged, and gradually heated up to 225°C for about 3 hours while passing nitrogen under a normal pressure, and after distilling off 4,200 g of water and 80 g of NMP, the reaction vessel was cooled down to 160°C. The amount of hydrogen sulfide scattered was 0.021 mol per 1 mol of charged sodium hydrosulfide.
Next, 2,942 g (20.0 mol) of p-dichlorobenzene and 1,515 g (15.3 mol) of NMP were added and the reaction vessel was sealed under nitrogen gas. Thereafter, while stirring at 400 rpm, the temperature was elevated from 200°C to 227°C at a rate of 0.8°C/min, then to 274°C at a rate of 0.6°C/min, and after holding at 274°C for 50 minutes, the temperature was elevated up to 282°C. The extraction valve at the bottom of the autoclave was opened, the contents were flushed into a vessel with a stirrer for 15 minutes while pressurizing with nitrogen, most of the NMP was removed by stirring for a short time at 250°C, and a solid matter containing the polyphenylene sulfide and salts was collected.
The obtained solid matter and 15,120 g of ion-exchanged water were placed in an autoclave equipped with a stirrer, and after being washed at 70°C for 30 minutes, suction-filtered through a glass filter. Then, 17,280 g of ion-exchanged water heated to 70°C was poured into the glass filter and suction filtered to obtain a cake.
The obtained cake, 11,880 g of ion-exchanged water, and 4 g of calcium acetate monohydrate (Sigma-Aldrich) were charged into an autoclave equipped with a stirrer, and the interior of the autoclave was purged with nitrogen, then heated up to 192°C and held for 30 minutes. Thereafter, the autoclave was cooled, and the contents were taken out.
After the contents were suction-filtered through a glass filter, 17,280 g of ion-exchanged water at 70°C was poured thereinto and suction-filtration was performed to obtain a cake. The obtained cake was dried with hot air at 80°C and then vacuum dried at 120°C for 24 hours to obtain a dried polyphenylene sulfide. The MFR of (B-4) finally obtained was 1,000 g/10 minutes.

(Reference Example 5) Preparation of polyphenylene sulfide (B-5) [copolymerized polyphenylene sulfide comprising polyphenylene sulfide composed of only para-phenylene sulfide units and polysiloxane]:

According to the method described in JP-A-64-45433, 937 g (12 mol) of anhydrous sodium sulfide, 3,570 g (14 mol) of 4,4-dichlorodiphenyl sulfide, and 10,280 g (104 mol) of N-methyl-2-pyrrolidone (NMP) were charged into an autoclave equipped with a reflux tube and a stirrer and heated under reflux at 200°C for 3 hours in a nitrogen atmosphere. Thereafter, the reaction mixture was poured into water, and the crude product was obtained by being filtered and then extracted with 300 ml of hot toluene. As a result, 2,720 g of polyphenylene sulfide oligomer insoluble in toluene was obtained.
Next , into an autoclave equipped with a stirrer, 1,164 g (6.5 mol) of the above-described polyphenylene sulfide oligomer, 400 g (3 mol) of p-amino thiophenol, 530 g (3.8 mol) of anhydrous potassium carbonate, and 10,280 g (104 mol) of N-methyl-2-pyrrolidone (NMP) were charged, and stirred in a nitrogen atmosphere at 130°C for 1 hour and then at 140-150°C for 1.5 hours. Next, the reaction mixture was heated at 220°C for 15 minutes and held at 200°C for 20 minutes. After cooling the obtained solution, 400 ml of water was poured and the precipitated crude product was obtained by filtration. The crude product was washed with methanol and then dried under reduced pressure. As a result, 1,215 g of polyphenylene sulfide was obtained.

500 g of the obtained polyphenylene sulfide, 1,380 g of NMP, 30.5 g of amino group-modified polydimethylsiloxane ("X-22-161A" supplied by Shin-Etsu Silicone Co., Ltd.), and 50.9 g of bisphenol A dianhydride were added to an autoclave equipped with a stirring blade, and a reaction mixture was prepared and heated to reflux. After water was azeotropically removed, the inside of the autoclave was sealed and replaced with nitrogen three times, and then the reaction mixture was heated to 250°C for about 15 minutes using a heat jacket while stirring at 240 rpm. After reacting for 60 minutes at a reaction temperature of 250°C, a product was obtained by rapidly cooling the autoclave. In order to recover the obtained product, the polymer was washed with hexane at 50°C for 15 minutes and filtered twice, and further washed with methanol at 50°C for 15 minutes and filtered twice, and washing with water at 70°C for 15 minutes and filtration were performed once to obtain polyphenylene sulfide (B-5).

<Reinforcing fiber bundle (A)>

(A-1): Carbon fiber "Torayca" T800-24K (supplied by Toray Industries, Inc.) was used. As a sizing agent for the carbon fibers, polyglycerol polyglycidyl ether (epoxy equivalent: 140 g/eq) was attached in an amount of 1.0% by weight with respect to the total (100% by mass) of the sizing agent and the carbon fibers.

(A-2): Carbon fiber "Torayca" M55JB-6K (supplied by Toray Industries, Inc.) was used. As a sizing agent for the carbon fibers, polyglycerol polyglycidyl ether (epoxy equivalent: 140 g/eq) was attached in an amount of 1.5% by weight with respect to the total (100% by mass) of the sizing agent and the carbon fibers.

(Example 1)

An epoxy resin (jER828, supplied by Japan Epoxy Resin Co., Ltd.), which is an impregnation resin, was melted in a melting bath at 200°C and supplied to a kiss coater by a gear pump. The epoxy resin was applied from the kiss coater onto a roll heated to 200°C to form a coating film. The carbon fibers (A-1) were passed over this roll while being in contact with each other to adhere a constant amount of the epoxy resin per a unit length of the carbon fiber bundle. The carbon fibers to which the epoxy resin was adhered were passed between free rolls which were heated to 230°C and arranged vertically and alternately in a straight line to obtain a composite in which the epoxy resin was sufficiently impregnated into the carbon fibers.

Subsequently, the polyphenylene sulfide (B-2) was melted in an extruder at 320°C and extruded into a crosshead die attached to the tip of the extruder, and at the same time, by continuously supplying the obtained composite into the crosshead die, a strand coated with the polyphenylene sulfide (B-2) was obtained.

After cooling the obtained strand, it was cut into a length of 7 mm with a cutter to obtain a long fiber pellet, which is the molding material of the present invention. This pellet had a core-sheath structure with the composite as the core and the polyphenylene sulfide (B-2) as the sheath. Further, the carbon fiber bundles were arranged in parallel to each other in a direction parallel to the axial direction of the molding material, and the length of the carbon fiber bundles was substantially the same as the length of the molding material.

The obtained long fiber pellet did not fluff during transportation and showed a good handling ability.

The obtained long fiber pellet-like molding material was subjected to injection molding using an injection molding machine SE75DUZ-C250 supplied by Sumitomo Heavy Industries, Ltd., at conditions of injection time: 2 seconds, back pressure: 10 MPa, pressure holding time: 10 seconds, cycle time: 55. seconds, cylinder temperature: 280°C, and mold temperature: 160°C, to prepare an ISO dumbbell tensile test piece (molded article). Here, the cylinder temperature indicates the temperature of the part of the injection molding machine that heats and melts the molding material, and the mold temperature indicates the temperature of the mold into which the molding material is injected to form a predetermined shape. Further, the cycle time indicates the time from the start of one injection molding process to the removal of the molded article. In addition, the injection pressure herein refers to the measured maximum pressure generated when the molten molding material was filled into the mold during injection molding. The obtained test piece (molded article) was allowed to stand for 24 hours in a constant temperature and humidity chamber adjusted to a temperature of 23°C and 50% RH, and then evaluated by the aforementioned methods. The properties of the molding material, the injection pressure value during injection molding, and the evaluation results of the molded article are shown in Table 1.

(Examples 2-8 and 11-15)

Molding materials (long fiber pellets) were obtained in the same manner as in Example 1 other than conditions where the kind and content of the reinforcing fiber bundle (A), the kind and content of the polyphenylene sulfide (B), and the kind and content of the resin (C) were changed as shown in Table 1.

The obtained pellets had composites in which the epoxy resin was sufficiently impregnated into the carbon fibers. Further, in the obtained pellets, the composite was coated with polyphenylene sulfide. In addition, the obtained pellets had a core-sheath structure with the composite as the core and the polyphenylene sulfide as the sheath. The length of the obtained long fiber pellets was 7 mm similarly to in Example 1. Furthermore, the carbon fiber bundles were arranged in parallel to each other in a direction parallel to the axial direction of the molding material, and the length of the carbon fiber bundles was substantially the same as the length of the molding material.

The long fiber pellets obtained in Examples 2 to 8 and 11 to 14 did not fluff during transportation and exhibited a good handling ability. On the other hand, since the long fiber pellet obtained in Example 15 contained a large amount of reinforcing fiber bundles (A), the amount of the polyphenylene sulfide (B) contained became relatively small, uneven coating and fluffing were observed, and the result was inferior in handling ability. By injection molding the obtained molding materials in the same manner as in Example 1, molded articles were manufactured and evaluated. The properties of the molding materials, the injection pressure values during injection molding, and the evaluation results of the molded articles are shown in Table 1.

(Examples 9 and 10)

Similarly to in Example 1, an epoxy resin (jER828, supplied by Japan Epoxy Resin Co., Ltd.), which is an impregnation resin, was melted in a melting bath at 200°C and supplied to the kiss coater by the gear pump. The epoxy resin was applied from the kiss coater onto a roll heated to 200°C to form a coating film. The carbon fibers (A-1) were passed over this roll while being in contact with each other to adhere a constant amount of epoxy resin per a unit length of the carbon fiber bundle. The carbon fibers to which the epoxy resin was adhered were passed between free rolls which were heated to 230°C and arranged vertically and alternately in a straight line to obtain a composite in which the epoxy resin was sufficiently impregnated into the carbon fibers.

Next, pellets of the polyphenylene sulfide resin (B-1), pellets of the polyphenylene sulfide resin (B-2), and aliphatic polycarbodiimide ("Carbodilite HMV-8CA" (supplied by Nisshinbo Chemical Co., Ltd.)) were dry blended, to obtain a mixture (mixed pellets) as an intermediate raw material. In the mixture (100% by mass), the content of the polyphenylene sulfide resin (B-1) was 29% by mass, the content of the polyphenylene sulfide resin (B-2) was 67% by mass, and the content of aliphatic polycarbodiimide was 4% by mass.

Using a TEX-30a type twin-screw extruder supplied by JSW Co., Ltd. (screw diameter: 30 mm, die diameter: 5 mm, barrel temperature: 260°C, screw rotational speed: 150 rpm), the obtained blended pellets were supplied from the main hopper of the extruder and melt-kneaded, discharged into the die in a molten state to coat the circumference the composite (with the discharge), and a molten continuous molding material (strand) was obtained.

At that time, the discharge amount in the die was adjusted so that the contents of the reinforcing fiber bundle (A), the polyphenylene sulfide resin (B), the resin (C) and aliphatic polycarbodiimide in the molding material became values shown in Table 1 with respect to the molding material (100 parts by mass).

After cooling the obtained continuous molding material (strand), it was cut with a cutter to obtain a molding material (long fiber pellets) having a length of 7 mm.

The obtained pellets had composites with epoxy sufficiently impregnated into the carbon fibers. Further, in the obtained pellets, the composite was coated with a resin composition comprising the polyphenylene sulfide (B-1), the polyphenylene sulfide (B-2), and the aliphatic polycarbodiimide ("Carbodilite HMV-8CA" (supplied by Nisshinbo Chemical Co., Ltd.)). Further, the obtained pellets had a core-sheath structure with the composite as the core and the above-described resin composition as the sheath. The length of the obtained long fiber pellet was 7 mm similarly to in Example 1. Furthermore, the carbon fiber bundles were arranged in parallel to each other in a direction parallel to the axial direction of the molding material, and the length of the carbon fiber bundles was substantially the same as the length of the molding material.

The obtained long fiber pellets did not fluff during transportation and showed a good handling ability. By injection molding the obtained molding material in the same manner as in Example 1, a molded article was manufactured and evaluated. The properties of the molding materials, the injection pressure values during injection molding, and the evaluation results of the molded articles are shown in Table 1.

(Comparative Examples 1 to 4)

Molding materials (long fiber pellets) were obtained in the same manner as in Example 1 other than conditions where the kind and content of the reinforcing fiber bundle (A), the kind and content of the polyphenylene sulfide (B), and the kind and content of the resin (C) were changed as shown in Table 2.

The obtained pellets had composites with epoxy resin sufficiently impregnated into the carbon fibers. Further, in the obtained pellets, the composite was coated with the polyphenylene sulfide. Further, the obtained pellets had a core-sheath structure with the composite as the core and the polyphenylene sulfide as the sheath. The length of the obtained long fiber pellet was 7 mm similarly to in Example 1. Furthermore, the carbon fiber bundles were arranged in parallel to each other in a direction parallel to the axial direction of the molding material, and the length of the carbon fiber bundles was substantially the same as the length of the molding material.

The long fiber pellets obtained in Comparative Examples 1 to 4 did not fluff during transportation and exhibited a good handling ability. By injection molding the obtained molding material in the same manner as in Example 1, molded articles were manufactured and evaluated. The evaluation results are shown in Table 2.

(Comparative Example 5)

Pellets of the polyphenylene sulfide resin (B-1), pellets of the polyphenylene sulfide resin (B-2), pellets of the polyphenylene sulfide resin (B-4), and the epoxy resin (C) were dry blended to obtain a mixture as an intermediate raw material. Each content in the mixture was as shown in Table 2.

Using a TEX-30α type twin-screw extruder supplied by JSW Co., Ltd. (screw diameter: 30 mm, die diameter: 5 mm, barrel temperature: 260°C, screw rotational speed: 150 rpm), the above-described mixture was supplied from the main hopper of the extruder and melt-kneaded, the molten resin composition was extruded from the die port while degassing from a downstream vacuum vent to obtain a continuous molding material (strand).

After cooling the obtained continuous molding material, it was cut with a cutter to obtain pellets of the thermoplastic resin composition having a length of 7 mm.

Since the obtained pellet did not contain the reinforcing fiber bundle (A), the length of the reinforcing fiber bundle could not be determined, and it did not have a core-sheath structure.

The obtained resin pellets were injection molded using an injection molding machine SE75DUZ-C250 supplied by Sumitomo Heavy Industries, Ltd., at conditions of injection time: 2 seconds, back pressure: 10 MPa, pressure holding time: 10 seconds, cycle time: 55. seconds, cylinder temperature: 280°C, and mold temperature: 160°C, to prepare an ISO dumbbell tensile test piece (molded article). Here, the cylinder temperature indicates the temperature of the part of the injection molding machine that heats and melts the molding material, and the mold temperature indicates the temperature of the mold into which the molding material is injected to form a predetermined shape. The obtained test piece (molded article) was allowed to stand for 24 hours in a constant temperature and humidity chamber adjusted to a temperature of 23°C and 50% RH, and then evaluated by the aforementioned methods. The evaluation results are shown in Table 2.

In Examples 1 to 15, since the melting point of the polyphenylene sulfide was low, the molding pressure during molding could be lowered and the processing temperature during molding could be lowered. As a result, the amount of gas generated during molding could be reduced, and the surface roughness Rz of the molded article could be reduced. Namely, it was possible to produce a molding material that provided a molded article excellent in surface smoothness and mechanical properties.

Further, in Examples 2 to 4, 6 to 10, and 12 to 15, since the polyphenylene sulfide contains the homo-polyphenylene sulfide composed of only para-phenylene sulfide units and the copolymerized polyphenylene sulfide comprising para-phenylene sulfide units and meta-phenylene sulfide units, as compared with the case of containing only copolymerized polyphenylene sulfide composed of meta-phenylene sulfide units (Examples 1 and 5), while the crystallization speed, that is, the solidification speed was increased, before the solidification of in a molten state began in the mold, the filling of the molding material into the mold could be completed. Thus, the molding materials in Examples 2-4, 6-10, 12-15 could further shorten the cycle times.

Further, in Examples 1 to 10 and 12 to 15, since the molding temperature could be lowered as compared with the case where the melting point of the polyphenylene sulfide was lowered by copolymerizing polysiloxane (Example 11), the generation of gas could be further suppressed, and the surface roughness of the molded article could be further reduced.

Further, in Examples 1 to 14, since the content of the carbon fiber bundles was within a suitable range, as compared with Example 15, the injection pressure could be further reduced.

In Comparative Examples 1 to 4, the molding materials had a melting point of the polyphenylene sulfide higher than 270°C and were inferior in surface smoothness of molded articles after molding due to gas generation derived from the sizing agent of the reinforcing fiber bundle during molding.

In Comparative Example 5, since the reinforcing fiber bundle (A) was not contained, it was a molding material inferior in mechanical properties.

[Table 1]

| | | | Example 1 | Example 2 | Example 3 | Example 4 | Example 5 | Example 6 | Example 7 | Example 8 |
|---|---|---|---|---|---|---|---|---|---|---|
| Reinforcing fiber bundle (A) | A-1 | % by mass | 30 | 30 | 30 | 30 | 30 | 0 | 20 | 0 |
| | A-2 | % by mass | 0 | 0 | 0 | 0 | 0 | 30 | 0 | 20 |
| Polyphenylene sulfide (B) | B-1 | % by mass | 0 | 6.4 | 19.2 | 32 | 0 | 19.2 | 22.8 | 22.8 |
| | B-2 | % by mass | 64 | 57.6 | 44.8 | 32 | 0 | 44.8 | 53.2 | 53.2 |
| | 3-3 | % by mass | 0 | 0 | 0 | 0 | 64 | 0 | 0 | 0 |
| | B-4 | % by mass | 0 | 0 | 0 | 0 | 0 | 0 | 0 | 0 |
| | B-5 | % by mass | 0 | 0 | 0 | 0 | 0 | 0 | 0 | 0 |
| Epoxy resin (C) | | % by mass | 6 | 6 | 6 | 6 | 6 | 6 | 4 | 4 |
| Polycarbodiimide | | % by mass | 0 | 0 | 0 | 0 | 0 | 0 | 0 | 0 |
| Meta ratio of (B) (※1) | | mol% | 15 | 13.5 | 10.5 | 7.5 | 10 | 10.5 | 10.5 | 10.5 |
| Melting point of (B) | | °C | 250 | 253 | 258 | 263 | 250 | 258 | 258 | 258 |
| Crystallization temperature during cooling | | °C | 150 | 155 | 165 | 175 | 150 | 165 | 165 | 165 |
| Melting point - Crystallization temperature during cooling of (B) | | °C | 100 | 98 | 93 | 88 | 100 | 93 | 93 | 93 |
| Molding temperature | | °C | 280 | 280 | 280 | 280 | 280 | 280 | 280 | 280 |
| Injection pressure | | Mpa | 137 | 147 | 148 | 168 | 140 | 140 | 100 | 100 |
| Cycle time | | s | 55 | 45 | 45 | 45 | 50 | 45 | 45 | 45 |
| Fiber length (※2) | | μm | 0.6 | 0.6 | 0.6 | 0.6 | 0.5 | 0.6 | 0.7 | 0.7 |

| | | Example 1 | Example 2 | Example 3 | Example 4 | Example 5 | Example 6 | Example 7 | Example 8 |
|---|---|---|---|---|---|---|---|---|---|
| Surface roughness Rz | μm | 1 | 1.2 | 1.3 | 2.8 | 1.3 | 1.5 | 0.9 | 1.0 |
| Tensile strength of molded article | MPa | 185 | 210 | 225 | 235 | 200 | 210 | 230 | 220 |
| Flexural modulus of molded article | Gpa | 31 | 31 | 30 | 30 | 30 | 45 | 21 | 31.5 |

| | | | Example 9 | Example 10 | Example 11 | Example 12 | Example 13 | Example 14 | Example 15 |
|---|---|---|---|---|---|---|---|---|---|
| Reinforcing fiber bundle (A) | A-1 | % by mass | 30 | 0 | 30 | 10 | 45 | 0 | 55 |
| | A-2 | % by mass | 0 | 30 | 0 | 0 | 0 | 10 | 0 |
| Polyphenylene sulfide (B) | B.1 | % by mass | 18.3 | 18.3 | 0 | 26.4 | 13.8 | 26.4 | 10.2 |
| | B-2 | % by mass | 42.7 | 42.7 | 0 | 61.6 | 32.2 | 61.6 | 23.8 |
| | B-3 | % by mass | 0 | 0 | 0 | 0 | 0 | 0 | 0 |
| | B-4 | % by mass | 0 | 0 | 0 | 0 | 0 | 0 | 0 |
| | B-5 | % by mass | 0 | 0 | 64 | 0 | 0 | 0 | 0 |
| Epoxy resin (C) | | % by mass | 6 | 6 | 6 | 2 | 9 | 2 | 11 |
| Polycarbodiimide | | % by mass | 3 | 3 | 0 | 0 | 0 | 0 | 0 |
| Meta ratio of (B) (※1) | mol% | | 10.5 | 10.5 | 0 | 10.5 | 10.5 | 10.5 | 10.5 |
| Melting point of (B) | °C | | 255 | 255 | 267 | 258 | 258 | 258 | 258 |
| Crystallization temperature during cooling | °C | | 165 | 165 | 190 | 165 | 165 | 165 | 165 |

EP 4 242 259 A1

(continued)

| | | Example 9 | Example 10 | Example 11 | Example 12 | Example 13 | Example 14 | Example 15 |
|---|---|---|---|---|---|---|---|---|
| Melting point - Crystallization temperature during cooling of (B) | °C | 93 | 93 | 77 | 93 | 93 | 93 | 93 |
| Molding temperature | °C | 280 | 280 | 320 | 280 | 280 | 280 | 280 |
| Injection pressure | Mpa | 165 | 165 | 170 | 65 | 170 | 50 | 175 |
| Cycle time | 5 | 45 | 45 | 45 | 45 | 45 | 45 | 45 |
| Fiber length (※2) | μm | 0.7 | 0.7 | 0.5 | 0.8 | 0.6 | 0.7 | 0.2 |
| Surface roughness Rz | μm | 1.6 | 1.8 | 3.5 | 0.7 | 2.2 | 0.5 | 3.0 |
| Tensile strength of molded article | MPa | 310 | 305 | 205 | 185 | 250 | 180 | 200 |
| Flexural modulus of molded article | Gpa | 28 | 45 | 30 | 14 | 40 | 22 | 50 |

※1: Content of meta-phenylene sulfide units in polyphenylene sulfide
※2: Weight average fiber length of reinforcing fibers contained in molded article

[Table 2]

| | | | Comparative Example 1 | Comparative Example 2 | Comparative Example 3 | Comparative Example 4 | Comparative Example 5 |
|---|---|---|---|---|---|---|---|
| Reinforcing fiber bundle (A) | A-1 | % by mass | 30 | 30 | 0 | 30 | 0 |
| | A-2 | % by mass | 0 | 0 | 30 | 0 | 0 |
| Polyphenylene sulfide (B) | B-1 | % by mass | 42.7 | 64 | 64 | 19.2 | 29.4 |
| | B-2 | % by mass | 21.3 | 0 | 0 | 0 | 68.6 |
| | B-3 | % by mass | 0 | 0 | 0 | 0 | 0 |
| | B-4 | % by mass | 0 | 0 | 0 | 44.8 | 0 |
| | B-5 | % by mass | 0 | 0 | 0 | 0 | 0 |
| Epoxy resin (C) | | % by mass | 6 | 6 | 6 | 6 | 2 |
| Polycarbodiimide | | % by mass | 0 | 0 | 0 | 0 | 0 |
| Meta ratio of (B) (※1) | | mol% | 5 | 0 | 0 | 0 | 10.5 |
| Melting point of (B) | | °C | 271 | 275 | 275 | 275 | 258 |
| Crystallization temperature during cooling | | °C | 192 | 200 | 200 | 200 | 165 |
| Melting point - Crystallization temperature during cooling of (B) | | °C | 79 | 75 | 75 | 75 | 93 |
| Molding temperature | | °C | 310 | 320 | 320 | 320 | 280 |
| Injection pressure | | Mpa | 185 | 190 | 200 | 140 | 30 |
| Cycle time | | s | 45 | 45 | 45 | 45 | 70 |
| Fiber length (2) | | μm | 0.6 | 0.6 | 0.2 | 0.4 | - |

EP 4 242 259 A1

(continued)

|  |  | Comparative Example 1 | Comparative Example 2 | Comparative Example 3 | Comparative Example 4 | Comparative Example 5 |
|---|---|---|---|---|---|---|
| Surface roughness Rz | $\mu$m | 4.3 | 4.5 | 4.5 | 7.0 | 0.3 |
| Tensile strength of molded article | MPa | 225 | 225 | 195 | 180 | 75 |
| ※※ Flexural modulus of molded article | Gpa | 29 | 29 | 43 | 28 | 3 |

※ 1: Content of meta-phenylene sulfide units in polyphenylene sulfide
※ 2: Weight average fiber length of reinforcing fibers contained in molded article

Explanation of symbols

1: reinforcing fiber bundle (A)
2: polyphenylene sulfide (B)
3: reinforcing fiber

**Claims**

1.  A molding material containing a reinforcing fiber bundle (A) and a polyphenylene sulfide (B), wherein a melting point of the polyphenylene sulfide (B) is 270°C or less.

2.  The molding material according to claim 1, wherein the polyphenylene sulfide (B) contains para-phenylene sulfide units and meta-phenylene sulfide units, and the content of the meta-phenylene sulfide units is 7 mol% or more with respect to the total amount of the para-phenylene sulfide units and the meta-phenylene sulfide units.

3.  The molding material according to claim 1 or 2, wherein the molding material is a long fiber pellet.

4.  The molding material according to any of claims 1 to 3, wherein the reinforcing fiber bundles (A) are arranged parallel to the axial direction of the molding material, and the length of the reinforcing fiber bundles (A) is substantially the same as the length of the molding material.

5.  The molding material according to any of claims 1 to 4, wherein a crystallization temperature during cooling of the polyphenylene sulfide (B) is 190°C or less.

6.  The molding material according to any of claims 1 to 5, wherein a difference between a crystallization temperature during cooling and the melting point of the polyphenylene sulfide (B) is 80°C or more.

7.  The molding material according to any of claims 1 to 6, wherein the molding material comprises the polyphenylene sulfide (B) and a composite, the composite comprises the reinforcing fiber bundle (A) and a resin (C), the resin (C) comprises one or more resins selected from the group consisting of an epoxy resin, a phenolic resin and a terpene resin, and the composite is coated with the polyphenylene sulfide (B).

8.  The molding material according to any of claims 1 to 7, wherein reinforcing fibers forming the reinforcing fiber bundle (A) are carbon fibers.

9.  The molding material according to any of claims 1 to 8, wherein a sizing agent adheres to the reinforcing fiber bundle (A).

10. A molded article containing a reinforcing fiber and a polyphenylene sulfide, wherein a weight average fiber length of the reinforcing fiber is 0.3 mm or more and 3.0 mm or less, and a melting point of the polyphenylene sulfide is 270°C or less.

11. A molded article containing a reinforcing fiber and a polyphenylene sulfide, wherein a weight average fiber length of the reinforcing fiber is 0.3 mm or more and 3.0 mm or less, and a crystallization temperature during cooling of the polyphenylene sulfide is 190°C or less.

12. The molded article according to claim 11, wherein a melting point of the polyphenylene sulfide is 270°C or less.

13. The molded article according to any of claims 10 to 12, wherein the polyphenylene sulfide contains para-phenylene sulfide units and meta-phenylene sulfide units, and the content of the meta-phenylene sulfide units is 7 mol% or more with respect to the total amount of the para-phenylene sulfide units and the meta-phenylene sulfide units.

14. The molded article according to any of claims 10 to 13, wherein the polyphenylene sulfide contains a homo-polyphenylene sulfide composed of only para-phenylene sulfide units and a copolymerized polyphenylene sulfide comprising para-phenylene sulfide units and meta-phenylene sulfide units.

# FIG. 1

1

2

# FIG. 2

2

1

# FIG. 3

1

2

# FIG. 4

1

2

# FIG. 5

# FIG. 6

# FIG. 7

## INTERNATIONAL SEARCH REPORT

| International application No. |
| --- |
| **PCT/JP2021/038942** |

| A. | CLASSIFICATION OF SUBJECT MATTER |
| --- | --- |

*C08K 7/02*(2006.01)i; *C08L 45/00*(2006.01)i; *C08L 61/04*(2006.01)i; *C08L 81/02*(2006.01)i; *C08L 63/00*(2006.01)i; *C08J 5/04*(2006.01)i
FI:   C08J5/04 CEZ; C08L81/02; C08K7/02; C08L61/04; C08L63/00 A; C08L45/00

According to International Patent Classification (IPC) or to both national classification and IPC

| B. | FIELDS SEARCHED |
| --- | --- |

Minimum documentation searched (classification system followed by classification symbols)

B29B11/16;15/08-15/14;C08J5/04-5/10;C08J5/24;C08K3/00-13/08;C08L1/00-101/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2008-231291 A (TORAY INDUSTRIES, INC.) 02 October 2008 (2008-10-02)<br>claim 2, paragraphs [0023], [0061], examples 1-3 | 1, 3-4, 8-10 |
| X | JP 2017-160316 A (TORAY PLASTICS PRECISION CO., LTD.) 14 September 2017 (2017-09-14)<br>paragraph [0039], examples 10-14 | 1, 3, 8-10 |
| Y | JP 61-14228 A (KUREHA CHEMICAL INDUSTRY CO., LTD.) 22 January 1986 (1986-01-22)<br>page 6, lower right column, line 11 to page 7, upper left column, line 11, page 10, lower right column, line 19 to page 11, upper right column, line 17, example 5, table 1 | 10-13 |
| Y | JP 2015-105359 A (TORAY INDUSTRIES, INC.) 08 June 2015 (2015-06-08)<br>paragraphs [0002], [0003], [0070], [0149]-[0152], example 18, table 4 | 10-13 |
| Y | JP 2005-15792 A (TORAY INDUSTRIES, INC.) 20 January 2005 (2005-01-20)<br>examples 1-6, 23-40 | 11 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 November 2021** | **14 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/038942** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-100365 A (DIC CORP.) 28 June 2018 (2018-06-28)<br>    entire text, all drawings | 1-14 |
| A | JP 2019-11421 A (TOSOH CORP.) 24 January 2019 (2019-01-24)<br>    entire text, all drawings | 1-14 |
| A | JP 2019-108537 A (TORAY INDUSTRIES, INC.) 04 July 2019 (2019-07-04)<br>    entire text, all drawings | 1-14 |
| A | JP 2004-59835 A (TORAY INDUSTRIES, INC.) 26 February 2004 (2004-02-26)<br>    entire text, all drawings | 1-14 |

Form PCT/ISA/210 (second sheet) (January 2015)

**INTERNATIONAL SEARCH REPORT**
Information on patent family members

| International application No. |
|---|
| **PCT/JP2021/038942** |

| Patent document cited in search report | | | Publication date (day/month/year) | Patent family member(s) | | | Publication date (day/month/year) |
|---|---|---|---|---|---|---|---|
| JP | 2008-231291 | A | 02 October 2008 | US | 2010/0068518 | A1 | |
| | | | | claim 2, paragraphs [0122], [0176], examples 1-3 | | | |
| | | | | WO | 2008/114573 | A1 | |
| | | | | EP | 2138530 | A1 | |
| | | | | EP | 3156439 | A1 | |
| | | | | KR | 10-2009-0125828 | A | |
| | | | | CN | 101679654 | A | |
| | | | | TW | 200906583 | A | |
| | | | | CN | 102660118 | A | |
| | | | | KR | 10-2013-0008651 | A | |
| | | | | TW | 201406826 | A | |
| JP | 2017-160316 | A | 14 September 2017 | (Family: none) | | | |
| JP | 61-14228 | A | 22 January 1986 | US | 4774298 | A | |
| | | | | page 14, line25 to page15, line30, example 5, table 1 | | | |
| | | | | EP | 166451 | A2 | |
| | | | | CA | 1260174 | A | |
| JP | 2015-105359 | A | 08 June 2015 | (Family: none) | | | |
| JP | 2005-15792 | A | 20 January 2005 | US | 2007/0021549 | A1 | |
| | | | | examples 1-6, 23-40 | | | |
| | | | | WO | 2004/108827 | A1 | |
| | | | | EP | 1630201 | A1 | |
| | | | | CN | 1798808 | A | |
| | | | | KR | 10-2006-0021340 | A | |
| | | | | TW | 200513496 | A | |
| JP | 2018-100365 | A | 28 June 2018 | (Family: none) | | | |
| JP | 2019-11421 | A | 24 January 2019 | (Family: none) | | | |
| JP | 2019-108537 | A | 04 July 2019 | (Family: none) | | | |
| JP | 2004-59835 | A | 26 February 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012158746 A
- JP 2012158747 A
- JP 8269200 A
- JP 6445433937 A